# EUROPÄISCHE PATENTSCHRIFT

(11) **EP 4 228 892 B1**
(45) Veröffentlichungstag und Bekanntmachung des Hinweises auf die Patenterteilung: **24.06.2026**
(21) Anmeldenummer: 21783519.8
(22) Anmeldetag: 29.09.2021
(51) Int. Cl.: B32B 17/10, G02B 27/01, B60J 1/02, C03C 17/36

(54) **PROJEKTIONSANORDNUNG FÜR EIN HEAD-UP-DISPLAY (HUD) MIT P-POLARISIERTER STRAHLUNG**
PROJECTION ASSEMBLY FOR A HEAD-UP DISPLAY (HUD) WITH P-POLARIZED RADIATION
DISPOSITIF DE PROJECTION POUR UN AFFICHAGE TÊTE HAUTE (HUD) À RAYONNEMENT P-POLARISÉ

(30) Priorität: 19.10.2020 EP 20202525
(43) Veröffentlichungstag der Anmeldung: 23.08.2023
(73) Patentinhaber: Saint-Gobain Sekurit France, 60150 Thourotte (FR)
(72) Erfinder: STRACKE, Rolf, 50869 Köln (DE)
(74) Vertreter: Feist, Florian Arno
(86) Internationale Anmeldenummer: PCT/EP2021/076746
(87) Internationale Veröffentlichungsnummer: WO 2022/083988

(56) Entgegenhaltungen:
- CN-U- 204 143 067
- US-A1- 2017 242 247

## Beschreibung

Die Erfindung betrifft eine Projektionsanordnung für ein Head-Up-Display.

Moderne Automobile werden in zunehmendem Maße mit sogenannten Head-Up-Displays (HUDs) ausgestattet. Mit einem Projektor, typischerweise im Bereich des Armaturenbretts, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

HUD-Projektoren werden überwiegend mit s-polarisierter Strahlung betrieben und bestrahlen die Windschutzscheibe mit einem Einfallswinkel von etwa 65%, was nahe dem Brewster-Winkel für einen Luft-Glas-Übergang liegt (56,5° für Kalk-Natron-Glas). Dabei tritt das Problem auf, dass das Projektorbild an beiden externen Oberflächen der Windschutzscheibe reflektiert wird. Dadurch tritt neben dem gewünschten Hauptbild auch ein leicht versetztes Nebenbild auf, das sogenannte Geisterbild ("Ghost"). Das Problem wird üblicherweise dadurch gemindert, dass die Oberflächen in einem Winkel zueinander eingeordnet werden, insbesondere durch Verwendung einer keilartigen Zwischenschicht zur Lamination der als Verbundscheibe ausgebildeten Windschutzscheiben, so dass Hauptbild und Geisterbild einander überlagert werden. Verbundgläser mit Keilfolien für HUDs sind beispielsweise aus WO2009/071135A1, EP1800855B1 oder EP1880243A2 bekannt.

Die Keilfolien sind kostspielig, so dass die Herstellung einer solchen Verbundscheibe für ein HUD recht kostenintensiv ist. Es besteht daher Bedarf an HUD-Projektionsanordnungen, die mit Windschutzscheiben ohne Keilfolien auskommen. So ist es beispielsweise möglich, den HUD-Projektor mit p-polarisierter Strahlung zu betreiben, welche an den Scheibenoberflächen nicht wesentlich reflektiert wird. Als Reflexionsfläche für die p-polarisierte Strahlung weist die Windschutzscheibe stattdessen eine Reflexionsbeschichtung auf. Die DE102014220189A1 offenbart eine solche HUD-Projektionsanordnung, welche mit p-polarisierter Strahlung betrieben wird. Als reflektierende Struktur wird unter anderem eine einzelne metallische Schicht vorgeschlagen mit einer Dicke von 5 nm bis 9 nm, beispielsweise aus Silber oder Aluminium. Auch die WO2019046157A1 offenbart ein HUD mit p-polarisierter Strahlung, wobei eine Reflexionsbeschichtung mit mindestens zwei metallischen Schichten verwendet wird.

US2017242247A1 offenbart eine weitere HUD-Projektionsanordnung mit einer Reflexionsbeschichtung für p-polarisierte Strahlung. Die Reflexionsbeschichtung kann eine oder mehrere leitfähige Silberschichten enthalten, darüber hinaus dielektrische Schichten. Das Reflexionsspektrum weist im relevanten Spektralbereich aber eine deutlich gekrümmte Form auf, so dass der Reflexionsgrad relativ stark wellenlängenabhängig ist. Dies ist nachteilhaft im Hinblick auf eine farbneutrale Darstellung der HUD-Projektion. Eine entsprechende Offenbarung findet sich zudem in CN204143067U.

Weitere Reflexionsbeschichtungen für HUD-Projektionsanordnungen mit p-polarisierter Strahlung sind beispielsweise bekannt aus WO2019179682A1, WO2019179683A1, WO2020094422A1, WO2020094423A1 sowie den nachveröffentlichten internationalen Patentanmeldungen WO2021004685A1 und WO2021104800A1.

Der vorliegenden Erfindung liegt die Aufgabe zugrunde, eine verbesserte Projektionsanordnung bereitzustellen, welche neben guten Abbildungseigenschaften für das HUD auch geräuschdämpfende Eigenschaften aufweist, um die Lärmbelastung im Fahrzeug-Innenraum durch Geräusche in der äußeren Umgebung, insbesondere Motorgeräusche und Laufgeräusche der Reifen zu verringern.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung für ein Head-Up-Display (HUD) umfasst mindestens eine Windschutzscheibe, die mit einer Reflexionsbeschichtung versehen ist, und einen Projektor (HUD-Projektor). Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Fahrzeuginnenraum zugewandte Scheibe der Windschutzscheibe bezeichnet. Mit Außenscheibe wird die der äußeren Umgebung zugewandte Scheibe bezeichnet. Die Windschutzscheibe ist bevorzugt die Windschutzscheibe eines Fahrzeugs zu Land, zu Wasser oder in der Luft, bevorzugt eines Kraftfahrzeugs, Schienenfahrzeugs, Flugzeugs oder Schiffes, insbesondere eines Personenkraftwagens oder Lastkraftwagens.

Die Außenscheibe und die Innenscheibe weisen jeweils eine außenseitige und eine innenraumseitige Oberfläche auf und eine dazwischen verlaufende, umlaufende Seitenkante. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Der Projektor ist auf den HUD-Bereich der Windschutzscheibe gerichtet. Er bestrahlt den HUD-Bereich mit Strahlung im sichtbaren Bereich des elektromagnetischen Spektrums zur Erzeugung der HUD-Projektion, insbesondere im Spektralbereich von 450 nm bis 650 nm, beispielsweise mit den Wellenlängen 473 nm, 550 nm und 630 nm (RGB). Die Strahlung des Projektors ist überwiegend p-polarisiert, weist also einen p-polarisierten Strahlungsanteil von größer als 50% auf. Die Reflexionsbeschichtung ist geeignet, p-polarisierte Strahlung zu reflektieren. Dadurch wird aus der Projektorstrahlung ein virtuelles Bild erzeugt, welches der Fahrer des Fahrzeugs von ihm aus gesehen hinter der Windschutzscheibe wahrnehmen kann.

Erfindungsgemäß wird also p-polarisierte Strahlung zur Erzeugung des HUD-Bildes verwendet und die Verbundscheibe weist eine Reflexionsbeschichtung auf, welche p-polarisierte Strahlung hinreichend reflektiert. Da der für HUD-Projektionsanordnungen typische Einfallswinkel von etwa 65° dem Brewsterwinkel für einen Luft-Glas-Übergang (56,5° bis 56,6°, Kalk-Natron-Glas, *n₂*=1,51-1,52) relativ nahekommt, wird p-polarisierte Strahlung von den Scheibenoberflächen kaum reflektiert, sondern hauptsächlich von der Reflexionsbeschichtung. Geisterbilder treten daher nicht oder kaum wahrnehmbar auf, so dass auf die Verwendung einer kostspieligen Keilfolie verzichtet werden kann. Außerdem ist das HUD-Bild auch für Träger von polarisationsselektiven Sonnenbrillen erkennbar, welche typischerweise nur p-polarisierte Strahlung passieren lassen und s-polarisierte Strahlung blocken.

Die Zwischenschicht ist erfindungsgemäß aus mindestens zwei Lagen thermoplastischen Materials mit unterschiedlicher Elastizität und/oder Plastizität ausgebildet, insbesondere unterschiedlicher Elastizität. Dadurch wird die Zwischenschicht mit geräuschdämpfenden Eigenschaften versehen. Eine mit einer solchen Zwischenschicht ausgestattete Windschutzscheibe kann den akustischen Komfort im Fahrzeug-Innenraum wirkungsvoll verbessern. Störgeräusche aus der äußeren Umgebung werden durch die Windschutzscheibe in gewissem Maße gedämpft, so dass sie im Innenraum weniger störend wahrgenommen werden. Das gilt insbesondere für Motorgeräusche und Geräusche, die während der Fahrt durch die rollenden Reifen hervorgerufen werden (Laufgeräusche).

Durch die erfindungsgemäße Windschutzscheibe wird also einerseits eine Projektionsfläche für eine intensitätsstarke und hochwertige HUD-Projektion bereitgestellt und andererseits der akustische Komfort im Fahrzeug-Innenraum verbessert. Das sind große Vorteile der vorliegenden Erfindung.

Die Zwischenschicht wird bevorzugt aus mindestens einer thermoplastischen Folie ausgebildet. Die Lagen unterschiedlicher Elastizität und/oder Plastizität können als einzelne Folien bereitgestellt werden, welche bei der Herstellung der Windschutzscheibe flächig aufeinander zwischen der Außenscheibe und der Innenscheibe angeordnet werden. Es ist jedoch bevorzugt, die Lagen unterschiedlicher Elastizität und/oder Plastizität als vorgefertigte mehrlagige Folie bereitzustellen, welche dann als ein Bauteil zwischen der Außenscheibe und der Innenscheibe angeordnet wird. Folien mit mehreren Lagen unterschiedlicher Elastizität und/oder Plastizität sind auch als geräuschmindernde Folien, akustische Folien oder Akustikfolien bekannt. Zur Ausbildung der Zwischenschicht können außer der Akustikfolie optional weitere thermoplastische Folien verwendet werden, so dass die Zwischenschicht weitere Lagen aufweist, die jedoch keinen oder nur einen geringen Einfluss auf die Geräuschdämpfung nehmen. Derjenige Teil der Zwischenschicht, der aus der Akustikfolie entsteht, kann als akustisches Modul bezeichnet werden. Die eingesetzten Folien sind typischerweise auch nach der Lamination der Verbundscheibe noch voneinander unterscheidbar. In einer vorteilhaften Ausgestaltung wird jedoch nur die Akustikfolie zur Lamination der Windschutzscheibe verwendet, so dass die Zwischenschicht allein aus dem akustischen Modul besteht. Die Dicke der Zwischenschicht beträgt bevorzugt von 0,5 mm bis 2 mm, besonders bevorzugt von 0,7 mm bis 1 mm.

Die Lagen unterschiedlicher Elastizität und/oder Plastizität können grundsätzlich durch die Verwendung unterschiedlicher polymerer Materialien verwirklicht werden. In einer bevorzugten Ausgestaltung sind aber die Lagen auf Basis desselben polymeren Materials ausgebildet, wobei die unterschiedliche Elastizität und/oder Plastizität durch einen unterschiedlichen Anteil an Weichmachern bewirkt wird. Die thermoplastische Zwischenschicht (beziehungsweise die sie ausbildende Folie) ist also aus mindestens zwei Lagen thermoplastischen Materials mit unterschiedlichem Weichmacher-Anteil ausgebildet. Die einzelnen Lagen der Zwischenschicht sind bevorzugt auf Basis von Ethylenvinylacetat (EVA), Polyvinylbutyral (PVB) oder Polyurethan (PU) oder Gemische oder Copolymere oder Derivate davon ausgebildet, besonders bevorzugt PVB. Als Weichmacher eignen sich unter anderem beispielsweise aliphatische Diester von Polyethylenglykolen (insbesondere des Tri- bzw. Tetraethylenglykols, beispielsweise Triethylenglycol di-2-ethyl Hexanoat), aromatische Diester von Polyethylenglykolen, Benzylbutylphthalat oder Carbonsäureester, die im Alkoholteil mindestens eine Etherverbindung enthalten. Es ist auch möglich, dass die verschiedenen Lagen unterschiedlicher Elastizität und/oder Plastizität sowohl auf Basis unterschiedlicher polymerer Materialien ausgebildet sind als auch einen unterschiedlichen Weichmacheranteil enthalten.

In Bezug auf polymere Materialien bedeutet es im Sinne der Erfindung, wenn eine Lage thermoplastischen Materials auf Basis eines Materials ausgebildet ist, dass die Lage mindestens 50 Gew.-% des besagten Materials enthält. Weitere Bestandteile können beispielsweise die besagten Weichmacher, chemische Stabilisatoren, UV- oder IR-Blocker oder Pigmente oder Farbstoffe sein.

In einer vorteilhaften Ausgestaltung umfasst die Zwischenschicht drei Lagen thermoplastischen Materials, nämlich eine mittlere Lage und zwei äußere Lagen. Die äußeren Lagen sind beidseitig der mittleren Lage angeordnet, so dass die mittlere Lage sandwich-artig von den beiden äußeren Lagen umgeben beziehungsweise eingeschlossen wird. Die mittlere Lage weist dabei eine andere Elastizität und/oder Plastizität aufweist als die beiden äußeren Lagen, insbesondere einen anderen Weichmacheranteil. Die beiden äußeren Lagen weisen bevorzugt die gleiche Elastizität und Plastizität auf, insbesondere den gleichen Weichmacheranteil. Die drei Lagen sind bevorzugt auf Basis desselben polymeren Materials ausgebildet, insbesondere auf Basis von PVB. Bei der Herstellung der Windschutzscheibe wird bevorzugt eine dreilagige Akustikfolie verwendet, mit den beiden äußeren Lagen und der mittleren Lage, so dass das akustische Modul aus genau drei Lagen besteht. Ein solches akustisches Modul weist einen vergleichsweise einfachen Aufbau auf und hat dennoch gute geräuschmindernde Eigenschaften. Die mittlere Lage weist bevorzugt einen geringeren Anteil an Weichmachern auf als die äußeren Lagen, so dass die Elastizität der mittleren Lage geringer ist als diejenige der äußeren Lagen, und bevorzugt die Plastizität höher ist.

Es ist auch möglich, dass die Akustikfolie mehr als drei Lagen aufweist, beispielsweise vier Lagen.

Die Außenscheibe und die Innenscheibe sind bevorzugt aus Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,5 mm bis 5 mm, bevorzugt von 1 mm bis 3 mm verwendet, beispielsweise die mit den Standarddicken 1,6 mm oder 2,1 mm.

Es ist vorteilhaft, wenn die Außenscheibe eine größere Dicke aufweist als die Innenscheibe. Durch eine solche asymmetrische Kombination wird (zumindest in manchen Frequenzbereichen) in Verbindung mit der erfindungsgemäßen mehrlagigen Zwischenschicht eine besonders gute geräuschmindernde Wirkung erzielt. Die Dicke der Außenscheibe beträgt dabei bevorzugt mindestens 2 mm, beispielsweise von 2 mm bis 3 mm, die Dicke der Innenscheibe bevorzugt weniger als 2 mm, beispielsweise von 1 mm bis 2 mm.

Die Reflexionsbeschichtung weist genau eine elektrisch leitfähige Schicht auf Basis von Silber auf, welche die reflektierende Wirkung bereitstellt. Um diese vor Korrosion zu schützen, ist die Reflexionsbeschichtung bevorzugt im Innern der Windschutzscheibe angeordnet, also zwischen der Außenscheibe und der Innenscheibe, wo sie keinen Kontakt zur umgebenden Atmosphäre hat. Die Reflexionsbeschichtung kann beispielsweise auf einer der Zwischenschicht zugewandten Oberflächen der beiden Scheiben, also der innenraumseitigen Oberfläche der Außenscheibe oder der außenseitigen Oberfläche der Innenscheibe, aufgebracht sein. Alternativ kann die Reflexionsbeschichtung auch innerhalb der thermoplastischen Zwischenschicht angeordnet sein, beispielsweise aufgebracht auf einer Trägerfolie, die zwischen zwei thermoplastischen Verbindefolien (insbesondere zwischen der besagten Akustikfolie und einer weiteren Folie) angeordnet ist. In einer vorteilhaften Ausgestaltung ist die Reflexionsbeschichtung auf der außenseitigen Oberfläche der Innenscheibe angeordnet. Das ist vorteilhaft im Hinblick auf die Intensität der HUD-Projektion, da die Strahlung des Projektors auf die Reflexionsbeschichtung trifft, bevor sie durch die Zwischenschicht optisch gedämpft wird. Da akustische thermoplastische Folien typischerweise dicker sind als Standardfolien wäre diese Dämpfung entsprechend stärker ausgeprägt. Neben der Intensität wird die Qualität der HUD-Projektion erhöht. In der Regel entspricht der Einfallswinkel der HUD-Strahlung nicht exakt dem Brewsterwinkel, so dass eine geringfügige Reflexion auch an den externen Oberflächen der Windschutzscheibe (außenseitige Oberfläche der Außenscheibe, innenraumseitige Oberfläche der Innenscheibe) erfolgt, insbesondere an der innenraumseitigen Oberfläche der Innenscheibe, auf welche die HUD-Projektorstrahlung ohne Intensitätsdämpfung trifft. Diese Reflexion kann zu einem intensitätsschwachen Geisterbild führen, also einer Projektion des HUD-Bildes, die gegenüber dem Hauptbild (hervorgerufen durch die Reflexion an der Reflexionsbeschichtung) leicht versetzt erscheint. Dadurch, dass die Reflexionsbeschichtung auf der außenseitigen Oberfläche der Innenscheibe positioniert ist, wird der Abstand zwischen den beiden Reflexionsebenen minimiert, so dass das Geisterbild nur minimal zum Hauptbild versetzt erscheint. Es fällt dann weniger störend auf. In dieser Ausgestaltung weist die Außenscheibe besonders bevorzugt eine größere Dicke auf als die Innenscheibe. Dadurch wird der Abstand zwischen den beiden Reflexionsebenen weiter verringert. Die Dicke der Außenscheibe beträgt dabei bevorzugt mindestens 2 mm, beispielsweise von 2 mm bis 3 mm, die Dicke der Innenscheibe bevorzugt weniger als 2 mm, beispielsweise von 1 mm bis 2 mm.

In einer weiteren vorteilhaften Ausgestaltung ist die Reflexionsbeschichtung derart im akustischen Modul integriert, dass sie zwischen zwei Lagen thermoplastischen Materials mit unterschiedlicher Elastizität und/oder Plastizität angeordnet ist. Die geräuschmindernde Zwischenschicht kann dann als vorgefertigte mehrlagige Folie mit bereits darin integrierter Reflexionsbeschichtung bereitgestellt werden. Die Außenscheibe und die Innenscheibe werden dann mittels dieser Folie miteinander zur Verbundscheibe laminiert. So kann ein eigener Verfahrensschritt zur Abscheidung der Reflexionsbeschichtung vermieden werden und die Herstellung der Windschutzscheibe wird vereinfacht.

Der Projektor ist innenraumseitig der Windschutzscheibe angeordnet und bestrahlt die Windschutzscheibe über die innenraumseitige Oberfläche der Innenscheibe. Er ist auf den HUD-Bereich gerichtet und bestrahlt diesen zur Erzeugung der HUD-Projektion. Die Strahlung des Projektors ist erfindungsgemäß überwiegend p-polarisiert, weißt also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab. Die Angabe der Polarisationsrichtung bezieht sich dabei auf die Einfallsebene der Strahlung auf der Windschutzscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe an einem Punkt innerhalb des HUD-Bereichs, bevorzugt im geometrischen Zentrum des HUD-Bereichs aufgespannt. Aufgrund der im Fahrzeugbereich üblichen Scheibenkrümmung, die sich auf die Einfallsebene und damit auf die Definition der Polarisation auswirkt, kann an anderen Stellen das Verhältnis von p-polarisierter Strahlung zu s-polarisierter Strahlung von diesem Referenzpunkt verschieden sein.

Die Strahlung des Projektors trifft bevorzugt mit einem Einfallswinkel von 45° bis 70°, insbesondere von 60° bis 70° auf die Windschutzscheibe. In einer vorteilhaften Ausgestaltung weicht der Einfallswinkel um höchstens 10° vom Brewsterwinkel ab. Die p-polarisierte Strahlung wird dann nur unwesentlich an den Oberflächen der Windschutzscheibe reflektiert, so dass kein Geisterbild erzeugt wird. Der Einfallswinkel ist der Winkel zwischen dem Einfallsvektor der Projektorstrahlung und der innenraumseitigen Flächennormale (also die Flächennormale auf die innenraumseitige externe Oberfläche der Windschutzscheibe) im geometrischen Zentrum des HUD-Bereichs. Der Brewsterwinkel für einen Luft-Glas-Übergang im Falle von Kalk-Natron-Glas, das für Fensterscheiben allgemein üblich ist, beträgt 57,2°. Idealerweise sollte der Einfallswinkel diesem Brewster-Winkel möglichst nahekommen. Es können aber beispielsweise auch Einfallswinkel von 65° verwendet werden, die für HUD-Projektionsanordnungen üblich sind, in Fahrzeugen problemlos zu realisieren sind und nur in einem geringen Maße vom Brewsterwinkel abweichen, so dass die Reflexion der p-polarisierten Strahlung nur unwesentlich zunimmt.

Da die Reflexion der Projektorstrahlung im Wesentlichen an der Reflexionsbeschichtung erfolgt und nicht an den externen Scheibenoberflächen, ist es nicht nötig, die externen Scheibenoberflächen in einem Winkel zueinander anzuordnen, um Geisterbilder zu vermeiden. Die externen Oberflächen der Windschutzscheibe sind daher bevorzugt im Wesentlichen parallel zueinander angeordnet. Als externe Oberflächen werden die von der Zwischenschicht abgewandten Oberflächen der beiden Scheiben bezeichnet, also die außenseitige Oberfläche der Außenscheibe und die innenraumseitige Oberfläche der Innenscheibe. Die thermoplastische Zwischenschicht ist dazu bevorzugt nicht keilartig ausgebildet, sondern weist eine im Wesentlichen konstante Dicke auf, insbesondere auch im vertikalen Verlauf zwischen der Oberkante und der Unterkante der Windschutzscheibe, ebenso wie die Innenscheibe und die Außenscheibe. Eine keilartige Zwischenschicht würde dagegen im vertikalen Verlauf zwischen Unterkante und Oberkante der Windschutzscheibe eine veränderliche, insbesondere zunehmende Dicke aufweisen. Die Zwischenschicht ist typischerweise aus mindestens einer thermoplastischen Folie ausgebildet. Da Standardfolien deutlich kostengünstiger sind als Keilfolien, wird die Herstellung der Windschutzscheibe günstiger gestaltet.

Die Außenscheibe, die Innenscheibe und die thermoplastische Zwischenschicht können klar und farblos, aber auch getönt oder gefärbt sein. Die Gesamttransmission durch Windschutzscheibe (samt Reflexionsbeschichtung) beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

In einer vorteilhaften Ausgestaltung ist die Außenscheibe getönt oder gefärbt. Dadurch kann die außenseitige Reflekivität der Windschutzscheibe verringert werden, wodurch der Eindruck der Scheibe angenehmer gestaltet wird für einen äußeren Betrachter. Um allerdings die vorgeschriebene Lichttransmission von 70% für Windschutzscheiben zu gewährleisten (Gesamttransmission), sollte die Außenscheibe bevorzugt eine Lichttransmission von mindestens 80% aufweisen, besonders bevorzugt von mindestens 85%. Die Innenscheibe und die Zwischenschicht sind bevorzugt klar, also nicht getönt oder gefärbt. Beispielsweise kann grün oder blau gefärbtes Glas als Außenscheibe eingesetzt werden.

Die Windschutzscheibe ist bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 m liegen. Die Windschutzscheibe kann aber auch plan sein, beispielsweise wenn es als Scheibe für Busse, Züge oder Traktoren vorgesehen ist.

Die Reflexionsbeschichtung soll eine hohe Reflektivität gegenüber p-polarisierter Strahlung im Spektralbereich von 450 nm bis 650 nm bewirken, der für HUD-Darstellungen relevant ist (HUD-Projektoren arbeiten typischerweise mit den Wellenlängen 473 nm, 550 nm und 630 nm (RGB)). Dadurch wird ein intensitätsstarkes HUD-Bild erreicht.

Die Reflexionsbeschichtung ist transparent, was im Sinne der Erfindung bedeutet, dass sie eine mittlere Transmission im sichtbaren Spektralbereich von mindestens 70 %, bevorzugt mindestens 80 % aufweist und dadurch die Durchsicht durch die Scheibe nicht wesentlich einschränkt. Grundsätzlich ist es ausreichend, wenn der HUD-Bereich der Windschutzscheibe mit der Reflexionsbeschichtung versehen ist. Es können aber auch weitere Bereiche mit der Reflexionsbeschichtung versehen sein und die Windschutzscheibe kann im wesentlichen vollflächig mit der Reflexionsbeschichtung versehen sein, was herstellungsbedingt bevorzugt sein kann. In einer Ausgestaltung der Erfindung sind mindestens 80% der Scheibenoberfläche mit der erfindungsgemäßen Reflexionsbeschichtung versehen. Insbesondere ist die Reflexionsbeschichtung vollflächig auf die Scheibenoberfläche aufgebracht mit Ausnahme eines umlaufenden Randbereichs und optional lokaler Bereich, die als Kommunikations-, Sensor- oder Kamerafenster die Transmission von elektromagnetischer Strahlung durch die Windschutzscheibe gewährleisten sollen und daher nicht mit der Reflexionsbeschichtung versehen sind. Der umlaufende unbeschichtete Randbereich weist beispielsweise eine Breite von bis zu 20 cm auf. Er verhindert den direkten Kontakt der Reflexionsbeschichtung zur umgebenden Atmosphäre, so dass die Reflexionsbeschichtung im Innern der Windschutzscheibe vor Korrosion und Beschädigung geschützt ist.

Die mit der Reflexionsbeschichtung versehene Windschutzscheibe weist bevorzugt im Spektralbereich von 450 nm bis 650 nm, besonders bevorzugt von 400 nm bis 680 nm, einen gemittelten Reflexionsgrad gegenüber p-polarisierter Strahlung von mindestens 15% auf, besonders bevorzugt von mindestens 20%. Damit wird ein hinreichend intensitätsstarkes Projektionsbild erzeugt. Hierbei wird der Reflexionsgrad gemessen mit einem Einfallswinkel von 65° zur innenraumseitigen Flächennormalen, was etwa der Bestrahlung durch übliche Projektoren entspricht. Der Spektralbereich von 400 nm bis 680 nm wurde zur Charakterisierung der Reflexionseigenschaften herabgezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der hohe Reflexionsgrad bei einem vergleichsweise einfachen Schichtaufbau ist ein großer Vorteil der vorliegenden Erfindung. Besonders gute Ergebnisse werden erzielt, wenn die Reflexionsgrad im gesamten Spektralbereich von 450 nm bis 650 nm, besonders bevorzugt von 400 nm bis 680 nm, mindestens 15 %, bevorzugt mindestens 20 % beträgt, so dass der Reflexionsgrad im angegeben Spektralbereich an keiner Stelle unter den angegebenen Werten liegt.

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad gegenüber p-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Um eine möglichst farbneutrale Darstellung des Projektorbildes zu erreichen, sollte das Reflexionsspektrum möglichst glatt sein und keine ausgeprägten lokalen Minima und Maxima ausweisen. Im Spektralbereich von 450 nm bis 650 nm, besonders bevorzugt von 400 nm bis 680 nm, sollte die Differenz zwischen dem maximal auftretenden Reflexionsgrad und dem Mittelwert des Reflexionsgrades sowie die Differenz zwischen dem minimal auftretenden Reflexionsgrad und dem Mittelwert des Reflexionsgrades in einer bevorzugten Ausgestaltung höchstens 3 % betragen, besonders bevorzugt höchstens 2 %. Auch hier ist wieder der Reflexionsgrad gegenüber p-polarisierter Strahlung gemessen mit einem Einfallswinkel von 65° zur innenraumseitigen Flächennormalen heranzuziehen. Die abgegebene Differenz ist als absolute Abweichung des Reflexionsgrades (angegeben in %) zu verstehen, nicht als prozentuale Abweichung relativ zum Mittelwert. Die angegebene Glätte des Reflexionsspektrums kann mit der erfindungsgemäßen Reflexionsbeschichtung aufgrund ihrer elektrisch leitfähigen Schicht problemlos erreicht werden.

Als Maß für die Glätte des Reflexionsspektrums kann alternativ die Standardabweichung im Spektralbereich von 450 nm bis 650 nm, besonders bevorzugt von 400 nm bis 680 nm, herangezogen werden. Sie beträgt bevorzugt kleiner 1%, besonders bevorzugt kleiner 0,9 %, ganz besonders bevorzugt kleiner 0,8 %.

Die Reflexionsbeschichtung ist ein Dünnschichtstapel, also eine Schichtenfolge dünner Einzelschichten. Die gewünschten Reflexionscharakteristika werden insbesondere durch die Wahl der Materialien und Dicken der Einzelschichten erreicht. Die Reflexionsbeschichtung kann so geeignet eingestellt werden.

Erfindungsgemäß weist die Reflexionsbeschichtung genau eine elektrisch leitfähige Schicht auf Basis von Silber auf, die zwischen zwei dielektrischen Schichten oder Schichtenfolgen angeordnet ist.

Die elektrisch leitfähige Schicht auf Basis von Silber kann auch vereinfacht als Silberschicht bezeichnet werden. Silberschichten weisen gute Reflexionseigenschaften auf. Außerdem weisen Silberschichten IR-reflektierende Eigenschaften auf, so dass die Reflexionsbeschichtung gleichzeitig als Sonnenschutzbeschichtung fungiert, welche die Aufheizung des Fahrzeuginnenraums durch Reflexion der Wärmestrahlung verringert. Die Reflexionsbeschichtung kann auch als Heizbeschichtung verwendet werden, wenn sie elektrisch kontaktiert wird, so dass ein Strom durch sie fließt, welcher die Reflexionsbeschichtung erwärmt. Die leitfähige Schicht enthält bevorzugt mindestens 90 Gew. % Silber, besonders bevorzugt mindestens 99 Gew. % Silber, ganz besonders bevorzugt mindestens 99,9 Gew. % Silber. Die Silberschicht kann Dotierungen aufweisen, beispielsweise Palladium, Gold, Kupfer oder Aluminium.

Reflexionsbeschichtungen mit einer einzelnen leitfähigen Schicht haben einen vorteilhaft einfachen Aufbau und setzen die Lichttransmission nicht zu stark herab. Dennoch können gute Reflexionseigenschaften gegenüber p-polarisierter Strahlung erreicht werden. Es können aber weitere metallische Schichten vorliegen, die nicht wesentlich zur elektrischen Leitfähigkeit der Reflexionsbeschichtung beitragen, sondern einen anderen Zweck erfüllen. Dies gilt insbesondere für metallische Blockerschichten mit geometrischen Dicken von weniger als 1 nm, die bevorzugt zwischen der Silberschicht und den dielektrischen Schichtenfolgen angeordnet sind.

Die geometrische Schichtdicke der einzelnen Silberschicht beträgt bevorzugt höchstens 15 nm, besonders bevorzugt höchstens 14 nm, ganz besonders bevorzugt höchstens 13 nm. Dadurch kann eine vorteilhafte Reflektivität im IR-Bereich, ohne die Transmission zu stark herabzusetzen. Die geometrische Schichtdicke der Silberschicht beträgt bevorzugt mindestens 5 nm, besonders bevorzugt mindestens 8 nm. Dünnere Silberschichten können zu einer Entnetzung des Schichtaufbaus führen. Besonders bevorzugt beträgt die geometrische Schichtdicke der Silberschicht von 10 nm bis 14 nm oder von 11 nm bis 13 nm. Die dielektrischen Schichten oder Schichtenfolgen bewirken insbesondere eine

Entspiegelung der elektrisch leitfähigen Schicht, um die Lichttransmission zu erhöhen, und haben Einfluss auf das Reflexionsspektrum gegenüber p-polarisierter Strahlung. Sie können vom Fachmann den Anforderungen im Einzelfall entsprechend gewählt werden.

Erfindungsgemäß wird ein Aufbau der dielektrischen Schichten oder Schichtenfolgen vorgeschlagen, der in Verbindung mit einer einzelnen Silberschicht besonders vorteilhafte Eigenschaften liefert. Unterhalb der elektrisch leitfähigen Schicht ist eine untere dielektrische Schicht oder Schichtenfolge angeordnet. Ebenso ist oberhalb der elektrisch leitfähigen Schicht eine obere dielektrische Schicht oder Schichtenfolge angeordnet.

Erfindungsgemäß weisen die obere und die untere dielektrische Schicht oder Schichtenfolge jeweils einen Brechungsindex auf, der mindestens 1,9 beträgt. Das Verhältnis der optischen Dicke der oberen dielektrischen Schicht oder Schichtenfolge zur optischen Dicke der unteren dielektrischen Schicht oder Schichtenfolge beträgt mindestens 1,7. Es hat sich überraschend gezeigt, dass diese Asymmetrie der optischen Dicken zu einem deutlich glatteren Reflexionsspektrum gegenüber p-polarisierter Strahlung führt, so dass über den gesamten relevanten Spektralbereich (400 nm bis 680 nm) ein relativ konstanter Reflexionsgrad vorliegt. Dadurch wird eine farbneutrale Darstellung der HUD-Projektion gewährleistet und ein farbneutraler Gesamteindruck der Scheibe.

Das erfindungsgemäße Verhältnis der optischen Dicken berechnet sich als Quotient aus der optischen Dicke der oberen dielektrischen Schicht oder Schichtenfolge (Divident) geteilt durch die optische Dicke der unteren dielektrischen Schicht oder Schichtenfolge (Divisor).

In einer bevorzugten Ausgestaltung beträgt das Verhältnis der optischen Dicke der oberen dielektrischen Schicht oder Schichtenfolge zur optischen Dicke der unteren dielektrischen Schicht oder Schichtenfolge mindestens 1,8, besonders bevorzugt mindestens 1,9. Damit werden besonders gute Ergebnisse erzielt.

Brechungsindizes sind im Rahmen der vorliegenden Erfindung grundsätzlich bezogen auf eine Wellenlänge von 550 nm angegeben. Die optische Dicke ist das Produkt aus der geometrischen Dicke und dem Brechungsindex (bei 550 nm). Die optische Dicke einer Schichtenfolge berechnet sich als Summe der optischen Dicken der Einzelschichten.

Ist eine erste Schicht oberhalb einer zweiten Schicht angeordnet, so bedeutet dies im Sinne der Erfindung, dass die erste Schicht weiter von dem Substrat, auf dem die Beschichtung aufgebracht ist, entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Die Reflexionsbeschichtung umfasst bevorzugt keine dielektrischen Schichten, deren Brechungsindex weniger als 1,9 beträgt. Alle dielektrischen Schichten der Reflexionsbeschichtung weisen also einen Brechungsindex von mindestens 1,9 auf. Da für niedrigbrechende Schichten mit einem Brechungsindex von kleiner als 1,9 insbesondere Siliziumoxid-Schichten in Frage kommen, die geringe Abscheidungsraten bei der magnetfeldunterstützten Kathodenabscheidung aufweisen, lässt sich die erfindungsgemäße Reflexionsbeschichtung so schnell und kostengünstig herstellen.

Die Reflexionsbeschichtung enthält oberhalb und unterhalb der Silberschicht unabhängig voneinander jeweils eine dielektrische Schicht oder eine dielektrische Schichtenfolge mit einem Brechungsindex von mindestens 1,9. Die dielektrischen Schichten können beispielsweise auf Basis von Siliziumnitrid, Zinkoxid, Zinn-Zink-Oxid, Silizium-Metall-Mischnitriden wie Silizium-Zirkonium-Nitrid, Zirkoniumoxid, Nioboxid, Hafniumoxid, Tantaloxid, Wolframoxid oder Siliziumkarbid ausgebildet sein. Die genannten Oxide und Nitride können stöchiometrisch, unterstöchiometrisch oder überstöchiometrisch abgeschieden sein. Sie können Dotierungen aufweisen, beispielsweise Aluminium, Zirkonium, Titan oder Bor. Durch die Dotierungen können an sich dielektrische Materialien mit einer gewissen elektrischen Leitfähigkeit versehen werden. Der Fachmann wird sie hinsichtlich Ihrer Funktion dennoch als dielektrische Schichten identifizieren, wie es im Bereich der dünnen Schichten üblich ist. Das Material der dielektrischen Schichten weist bevorzugt eine elektrische Leitfähigkeit (Kehrwert des spezifischen Widerstands) von kleiner 10⁻⁴ S/m auf. Das Material der elektrisch leitfähigen Schichten weist bevorzugt eine elektrische Leitfähigkeit von größer 10⁴ S/m auf.

Die optische Dicke der oberen dielektrischen Schicht oder Schichtenfolge beträgt bevorzugt von 100 nm bis 200 nm, besonders bevorzugt von 130 nm bis 170 nm. Die optische Dicke der unteren dielektrischen Schicht oder Schichtenfolge beträgt bevorzugt von 50 nm bis 100 nm, besonders bevorzugt von 60 nm bis 90 nm. Damit werden gute Ergebnisse erzielt.

In einer vorteilhaften Ausgestaltung ist oberhalb und unterhalb der Silberschicht jeweils eine dielektrische Schicht angeordnet, die als Entspiegelungsschicht bezeichnet werden kann und bevorzugt auf Basis eines Oxids, beispielsweise Zinnoxid, und/oder eines Nitrids, beispielsweise Siliziumnitrid, besonders bevorzugt auf Basis von Siliziumnitrid. Siliziumnitrid hat sich aufgrund seiner optischen Eigenschaften, seiner einfachen Verfügbarkeit sowie seiner hohen mechanischen und chemischen Stabilität bewährt. Das Silizium ist bevorzugt dotiert, beispielsweise mit Aluminium oder Bor. Im Falle von dielektrischen Schichtenfolgen ist die Schicht auf Basis von Siliziumnitrid bevorzugt die oberste Schicht der oberen Schichtenfolge beziehungsweise die unterste Schicht der unteren Schichtenfolge. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

Neben der Entspiegelungsschicht können optional weitere dielektrische Schichten mit Brechungsindex von mindestens 1,9 vorhanden sein. So können die obere und untere Schichtenfolge unabhängig voneinander eine Anpassungsschicht enthalten, welche die Reflektivität der Silberschicht verbessern. Die Anpassungsschichten sind bevorzugt auf Basis von Zinkoxid ausgebildet, besonders bevorzugt Zinkoxid ZnO_{1-δ} mit 0 ≤ δ ≤ 0,01. Die Anpassungsschichten enthalten weiter bevorzugt Dotierungen. Die Anpassungsschichten können beispielsweise Aluminium-dotiertes Zinkoxid (ZnO:Al) enthalten. Das Zinkoxid wird bevorzugt unterstöchiometrisch bezüglich des Sauerstoffs abgeschieden um eine Reaktion von überschüssigem Sauerstoff mit der silberhaltigen Schicht zu vermeiden. Die Anpassungsschichten sind bevorzugt angeordnet zwischen der Silberschicht und der Entspiegelungsschicht. Die geometrische Dicke der Anpassungsschicht beträgt bevorzugt von 5 nm bis 30 nm, besonders bevorzugt von 8 nm bis 12 nm.

Es können auch brechungsindexsteigernde Schichten vorhanden sein, die einen höheren Brechungsindex aufweisen als die Entspiegelungsschicht, ebenfalls unabhängig voneinander in der oberen und der unteren Schichtenfolge. Dadurch können die optischen Eigenschaften weiter verbessert und feineingestellt werden, insbesondere die Reflexionseigenschaften. Die brechungsindexsteigernden Schichten enthalten bevorzugt ein Silizium-Metall-Mischnitrid wie Silizium-Zirkonium-Mischnitrid, Silizium-Aluminium-Mischnitrid, Silizium-Titan-Mischnitrid oder Silizium-Hafnium-Mischnitrid, besonders bevorzugt Silizium-Zirkonium-Mischnitrid. Der Anteil an Zirkonium beträgt dabei bevorzugt zwischen 15 und 45 Gew.-%, besonders bevorzugt zwischen 15 und 30 Gew.-%. Als alternative Materialien kommen beispielsweise WO₃, Nb₂O₅, Bi₂O₃, TiO₂, Zr₃N₄ und/oder AIN in Betracht. Die brechungsindexsteigernden Schichten sind bevorzugt zwischen der Entspiegelungsschicht und der Silberschichtung angeordnet beziehungsweise zwischen der Anpassungsschicht (soweit vorhanden) und der Entspiegelungsschicht. Die geometrische Dicke der brechungsindexsteigernden Schicht beträgt bevorzugt von 5 nm bis 30 nm, besonders bevorzugt von 5 nm bis 15 nm.

In einer Ausgestaltung ist unterhalb der elektrisch leitfähigen Schicht genau eine untere dielektrische Schicht mit einem Brechungsindex von mindestens 1,9 angeordnet, bevorzugt auf Basis von Siliziumnitrid. Ebenso ist oberhalb der elektrisch leitfähigen Schicht genau eine obere dielektrische Schicht mit einem Brechungsindex von mindestens 1,9 angeordnet, bevorzugt auf Basis von Siliziumnitrid. Es ergibt sich die Schichtenfolge ausgehend vom Substrat: untere Entspiegelungsschicht - Silberschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm.

In einer weiteren Ausgestaltung ist unterhalb der elektrisch leitfähigen Schicht eine erste untere dielektrische Schicht (Entspiegelungsschicht) und eine zweite untere dielektrische Schicht (Anpassungsschicht) angeordnet. Ebenso ist oberhalb der elektrisch leitfähigen Schicht eine erste obere dielektrische Schicht (Entspiegelungsschicht) und eine zweite obere dielektrische Schicht (Anpassungsschicht) angeordnet. Die Entspiegelungs- und Anpassungsschichten weisen einen Brechungsindex von mindestens 1,9 auf. Die Entspiegelungsschichten sind bevorzugt auf Basis von Siliziumnitrid ausgebildet, die Anpassungsschichten auf Basis von Zinkoxid. Die Anpassungsschichten sind bevorzugt zwischen der jeweiligen Entspiegelungsschicht und der Silberschicht angeordnet: Es ergibt sich die Schichtenfolge ausgehend vom Substrat: untere Entspiegelungsschicht - untere Anpassungsschicht - Silberschicht - obere Anpassungsschicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm.

In einer weiteren Ausgestaltung ist unterhalb der elektrisch leitfähigen Schicht eine erste untere dielektrische Schicht (Entspiegelungsschicht), eine zweite untere dielektrische Schicht (Anpassungsschicht) und eine dritte untere dielektrische Schicht (brechungsindexsteigernde Schicht) angeordnet. Ebenso ist oberhalb der elektrisch leitfähigen Schicht eine erste obere dielektrische Schicht (Entspiegelungsschicht), eine zweite obere dielektrische Schicht (Anpassungsschicht) und eine dritte obere dielektrische Schicht (brechungsindexsteigernde Schicht) angeordnet. Die Entspiegelungs- und Anpassungsschichten sowie die brechungsindexsteigernden Schichten weisen einen Brechungsindex von mindestens 1,9 auf. Die brechungsindexsteigernden Schichten weisen einen höheren Brechungsindex auf als die Entspiegelungsschichten, bevorzugt mindestens 2,1. Die Entspiegelungsschichten sind bevorzugt auf Basis von Siliziumnitrid ausgebildet, die Anpassungsschichten auf Basis von Zinkoxid, die brechungsindexsteigernden Schichten auf Basis eines Silizium-Metall-Mischnitrids, wie Silizium-Zirkonium-Mischnitrid oder Silizium-Hafnium-Mischnitrid. Die Anpassungsschichten weisen bevorzugt den geringsten Abstand zur Silberschicht auf, während die brechungsindexsteigernden Schichten zwischen den Anpassungsschichten und den Entspiegelungsschichten angeordnet sind. Es ergibt sich die Schichtenfolge ausgehend vom Substrat: untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht. Die Reflexionsbeschichtung enthält bevorzugt keine weiteren dielektrischen Schichten. Die geometrische Dicke der oberen Entspiegelungsschicht beträgt bevorzugt von 50 nm bis 100 nm, besonders bevorzugt von 55 nm bis 80 nm, insbesondere von 60 nm bis 70 nm. Die geometrische Dicke der unteren Entspiegelungsschicht beträgt bevorzugt von 10 nm bis 50 nm, besonders bevorzugt von 15 nm bis 40 nm, insbesondere von 20 nm bis 35 nm. Die geometrische Dicke der Anpassungsschichten beträgt bevorzugt von 5 nm bis 30 nm, besonders bevorzugt von 8 nm bis 12 nm. Die geometrische Dicke der brechungsindexsteigernden Schichten beträgt bevorzugt von 5 nm bis 30 nm, besonders bevorzugt von 5 nm bis 15 nm.

Da die obere und die untere dielektrische Schichtenfolge unabhängig voneinander ausgebildet werden können, sind auch Kombinationen der vorstehend beschriebenen Ausgestaltungen möglich, wobei die obere dielektrische Schicht/Schichtenfolge gemäß einer Ausgestaltung ausgebildet ist und die untere dielektrische Schicht/Schichtenfolge gemäß einer anderen. Es ergeben sich die folgenden bevorzugten Schichtenfolgen (jeweils ausgehend vom Substrat, also derjenigen Oberfläche, auf die die Reflexionsbeschichtung abgeschieden ist:
- untere Entspiegelungsschicht - Silberschicht - obere Entspiegelungsschicht
- untere Entspiegelungsschicht - Silberschicht - obere Anpassungsschicht - obere Entspiegelungsschicht
- untere Entspiegelungsschicht - Silberschicht - obere Anpassungsschicht - obere brechungsindexsteigernde Schicht - obere Entspiegelungsschicht
- untere Entspiegelungsschicht - untere Anpassungsschicht - Silberschicht - obere Entspiegelungsschicht
- untere Entspiegelungsschicht - untere Anpassungsschicht - Silberschicht - obere Anpassungsschicht - obere Entspiegelungsschicht
- untere Entspiegelungsschicht - untere Anpassungsschicht - Silberschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - obere Entspiegelungsschicht
- untere Entspiegelungsschicht - untere brechungsindexsteigernde Schicht - untere Anpassungsschicht - Silberschicht - obere Anpassungsschicht - obere Entspiegelungsschicht
- untere Entspiegelungsschicht - untere brechungsindexsteigernde Schicht - untere Anpassungsschicht - Silberschicht - obere Anpassungsschicht - obere brechungsindexsteigernde Schicht - obere Entspiegelungsschicht

In einer vorteilhaften Ausgestaltung umfasst die Reflexionsbeschichtung mindestens eine metallische Blockerschicht. Solche Blockerschichten wiesen eine Dicke von weniger als 1 nm auf und gelten nicht als elektrisch leitfähige Schichten im Sinne der Erfindung. Die Blockerschicht kann unterhalb und/oder oberhalb der elektrisch leitfähigen Schicht, insbesondere Silberschicht, angeordnet sein und steht bevorzugt mit der elektrisch leitfähigen Schicht in direktem Kontakt. Die Blockerschicht liegt dann zwischen leitfähiger Schicht und dielektrischer Schicht/Schichtenfolge. Die Blockerschicht dient dem Oxidationsschutz der leitfähigen Schicht insbesondere bei Temperaturbehandlungen der beschichteten Scheibe, wie sie typischerweise im Rahmen von Biegeprozessen vorkommen. Die Blockerschicht weist bevorzugt eine geometrische Dicke von 0,1 nm bis 0,5 nm auf. Die Blockerschicht ist bevorzugt auf Basis von Titan, Niob oder einer Nickel-Chrom-Legierung ausgebildet.

Die Blockerschicht ändert die optischen Eigenschaften der Reflexionsbeschichtung nur unwesentlich und ist bevorzugt bei allen vorstehend beschriebenen Ausgestaltungen vorhanden. Besonders bevorzugt ist die Blockerschicht direkt oberhalb der Silberschicht angeordnet, also zwischen Silberschicht und oberer dielektrischer Schicht(enfolge), wo sie besonders effektiv ist. Es ergeben sich folgende bevorzugte Schichtenfolgen:
- untere Entspiegelungsschicht - Silberschicht - Blockerschicht - obere Entspiegelungsschicht
- untere Entspiegelungsschicht - Silberschicht - Blockerschicht - obere Anpassungsschicht - obere Entspiegelungsschicht
- untere Entspiegelungsschicht - Silberschicht - Blockerschicht - obere Anpassungsschicht - obere brechungsindexsteigernde Schicht - obere Entspiegelungsschicht
- untere Entspiegelungsschicht - untere Anpassungsschicht - Silberschicht - Blockerschicht - obere Entspiegelungsschicht
- untere Entspiegelungsschicht - untere Anpassungsschicht - Silberschicht - Blockerschicht - obere Anpassungsschicht - obere Entspiegelungsschicht
- untere Entspiegelungsschicht - untere Anpassungsschicht - Silberschicht - Blockerschicht - obere Anpassungsschicht - obere brechungsindexsteigernde Schicht - obere Entspiegelungsschicht
- untere Entspiegelungsschicht - untere brechungsindexsteigernde Schicht - untere Anpassungsschicht - Silberschicht - Blockerschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere Entspiegelungsschicht
- untere Entspiegelungsschicht - untere brechungsindexsteigernde Schicht - untere Anpassungsschicht - Silberschicht - Blockerschicht - obere Anpassungsschicht - obere brechungsindexsteigernde Schicht - obere Entspiegelungsschicht

Es kann jeweils optional eine zusätzliche Blockerschicht direkt unterhalb der Silberschicht angeordnet sein, also zwischen Silberschicht und unterer dielektrischer Schicht(enfolge).

Die Erfindung umfasst auch die Herstellung einer erfindungsgemäßen Projektionsanordnung, wobei zunächst eine erfindungsgemäße Windschutzscheibe hergestellt wird und diese in räumlicher Beziehung zu einem erfindungsgemäßen Projektor angeordnet wird, so dass der Projektor auf den HUD-Bereich der Windschutzscheibe gerichtet wird.

Zur Herstellung der Windschutzscheibe werden eine Außenscheibe und eine Innenscheibe bereitgestellt und diese über eine erfindungsgemäße thermoplastische Zwischenschicht durch Lamination miteinander verbunden.

Zur Ausbildung der Zwischenschicht wird bevorzugt eine mehrlagige thermoplastische Folie mit mindestens zwei Lagen thermoplastischen Materials mit unterschiedlicher Elastizität und/oder Plastizität eingesetzt, die flächig zwischen der Außenscheibe und der Innenscheibe angeordnet wird und bei der Lamination die Zwischenschicht (beziehungsweise deren akustisches Modul) ausbildet. Es können aber auch Einzelfolien thermoplastischen Materials mit unterschiedlicher Elastizität und/oder Plastizität aufeinander gestapelt werden. Neben der mehrlagigen thermoplastischen Folie (oder den Einzelfolien zur Ausbildung des akustischen Moduls) können weitere thermoplastische Folien zwischen den Scheiben angeordnet werden.

In einer Ausführungsform wird die Reflexionsbeschichtung eigens bereitgestellt. Dazu wird die Reflexionsbeschichtung auf eine Oberfläche der Außenscheibe oder der Innenscheibe abgeschieden, bevorzugt auf derjenigen Oberfläche der Innenscheibe, die bei der Lamination der Zwischenschicht zugewandt wird. Die Reflexionsbeschichtung wird bevorzugt durch physikalische Gasphasenabscheidung (PVD) auf der Scheibenoberfläche aufgebracht, besonders bevorzugt durch Kathodenzerstäubung ("Sputtern"), ganz besonders bevorzugt durch magnetfeldunterstütze Kathodenzerstäubung ("Magnetronsputtern"). Die Beschichtung wird bevorzugt vor der Lamination aufgebracht. Statt die Reflexionsbeschichtung auf eine Scheibenoberfläche aufzubringen, kann sie grundsätzlich auch auf einer Trägerfolie bereitgestellt werden, die in der Zwischenschicht angeordnet wird, beispielsweise zwischen der mehrlagigen, akustischen Folie und einer weiteren Folie. Wird das akustische Modul aus Einzelfolien ausgebildet, so kann die Trägerfolie auch zwischen diese eingelegt werden. Als Trägerfolien eignen sich dünne thermoplastische Folien, insbesondere Folien auf Basis von Polyethylenterephthalat (PET) mit einer Dicke von weniger als 100 µm, beispielsweise 50 µm.

In einer weiteren Ausführungsform wird die Reflexionsbeschichtung als Teil einer mehrlagigen, akustischen Folie bereitgestellt, wobei die Reflexionsbeschichtung zwischen zwei Lagen thermoplastischen Materials mit unterschiedlicher Elastizität und/oder Plastizität angeordnet ist. Der Vorteil liegt darin, dass die akustische Folie zusammen mit der Reflexionsbeschichtung gehandhabt werden kann und die Windschutzscheibe in einem Schritt mit dem akustischen Modul und der Reflexionsbeschichtung ausgestattet wird, was die Herstellung vereinfacht. Die Reflexionsbeschichtung kann direkt auf eine der besagten Lagen thermoplastischen Materials abgeschieden sein oder auf einer Trägerfolie zwischen diese eingelegt sein.

Die Lamination erfolgt durch an sich bekannte Verfahren. Die Außenscheibe und die Innenscheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Soll die Windschutzscheibe gebogen sein, so werden die Außenscheibe und die Innenscheibe bevorzugt vor der Lamination und bevorzugt nach etwaiger Beschichtungsprozesse einem Biegeprozess unterzogen. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C. Diese Temperaturbehandlung erhöht auch die Transparenz und verringert den Flächenwiderstand der Reflexionsbeschichtung.

Die Erfindung umfasst außerdem die Verwendung einer erfindungsgemäß ausgebildeten Windschutzscheibe als Projektionsfläche einer Projektionsanordnung für ein Head-Up-Display, wobei ein Projektor auf den HUD-Bereich gerichtet ist, dessen Strahlung überwiegend p-polarisiert ist. Die vorstehend beschriebenen bevorzugten Ausgestaltungen gelten für die Verwendung entsprechend.

Die Erfindung umfasst weiter die Verwendung einer erfindungsgemäßen Projektionsanordnung als HUD in einem Fahrzeug zu Land, zu Wasser oder in der Luft, bevorzugt einem Kraftfahrzeug, Schienenfahrzeug, Flugzeug oder Schiff, insbesondere einem Personenkraftwagen oder Lastkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Verbundscheibe einer gattungsgemäßen Projektionsanordnung,
- Fig. 2: einen Querschnitt durch eine gattungsgemäße Projektionsanordnung,
- Fig. 3: einen Querschnitt durch eine Verbundscheibe einer erfindungsgemäßen Projektionsanordnung,
- Fig. 4: einen Querschnitt durch eine Ausgestaltung der Zwischenschicht 3,
- Fig. 5: einen Querschnitt durch eine weitere Ausgestaltung der Zwischenschicht 3,
- Fig. 6: einen Querschnitt durch eine Ausgestaltung der erfindungsgemäßen Reflexionsbeschichtung auf einer Innenscheibe,
- Fig. 7: Reflexionsspektren von Verbundscheiben gegenüber p-polarisierter Strahlung gemäß den Beispielen 1 und 2 und dem nicht erfindungsgemäßen Beispiel 6,
- Fig. 8: Reflexionsspektren von Verbundscheiben gegenüber p-polarisierter Strahlung gemäß dem Beispiel 3 und dem nicht erfindungsgemäßen Beispiel 7 und
- Fig. 9: Reflexionsspektren von Verbundscheiben gegenüber p-polarisierter Strahlung gemäß den Beispielen 4 und 5 und den nicht erfindungsgemäßen Beispielen 8 und 9.

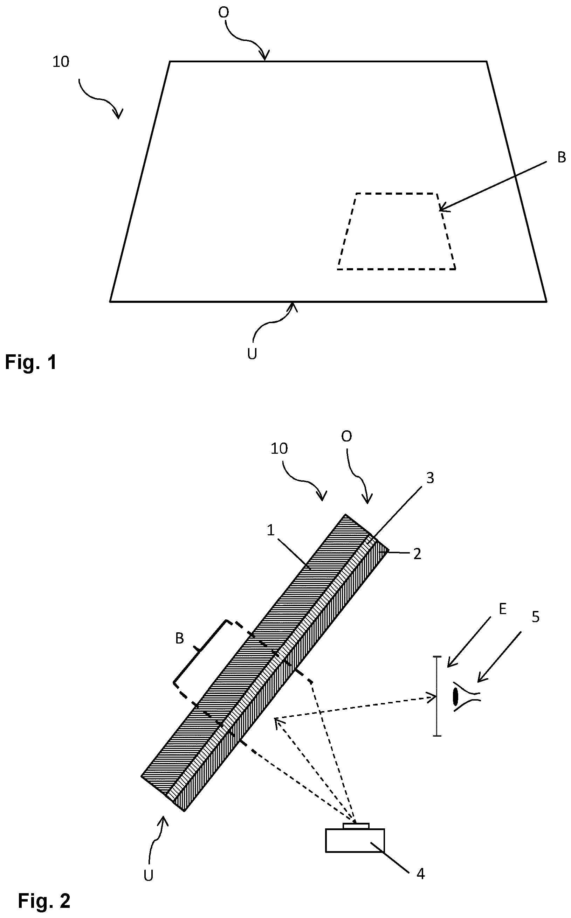

Figur 1 und Figur 2 zeigen je ein Detail einer gattungsgemäßen Projektionsanordnung für ein HUD. Die Projektionsanordnung umfasst eine Windschutzscheibe 10, insbesondere die Windschutzscheibe eines Personenkraftwagens. Die Projektionsanordnung umfasst außerdem einen Projektor 4, welcher auf einen Bereich der Verbundscheibe 10 gerichtet ist. In diesem Bereich, der üblicherweise als HUD-Bereich B bezeichnet wird, können durch den Projektor 4 Bilder erzeugt werden, welche von einem Betrachter 5 (Fahrzeugfahrer) als virtuelle Bilder auf der von ihm abgewandten Seite der Verbundscheibe 10 wahrgenommen werden, wenn sich seine Augen innerhalb der sogenannten Eyebox E befinden.

Die Windschutzscheibe 10 ist aufgebaut aus einer Außenscheibe 1 und einer Innenscheibe 2, die über eine thermoplastische Zwischenschicht 3 miteinander verbunden sind. Die Windschutzscheibe 10 weist eine Oberkante O und eine Unterkante U auf sowie zwei dazwischen verlaufende Seitenkanten. Mit Oberkante O wird diejenige Kante bezeichnet, welche dafür vorgesehen ist, in Einbaulage nach oben zu weisen. Mit Unterkante O wird diejenige Kante bezeichnet, welche dafür vorgesehen ist, in Einbaulage nach unten zu weisen. Die Oberkante O wird häufig auch als Dachkante und die Unterkante U als Motorkante bezeichnet. Die Außenscheibe 1 ist in Einbaulage der äußeren Umgebung zugewandt, die Innenscheibe 2 dem Fahrzeuginnenraum.

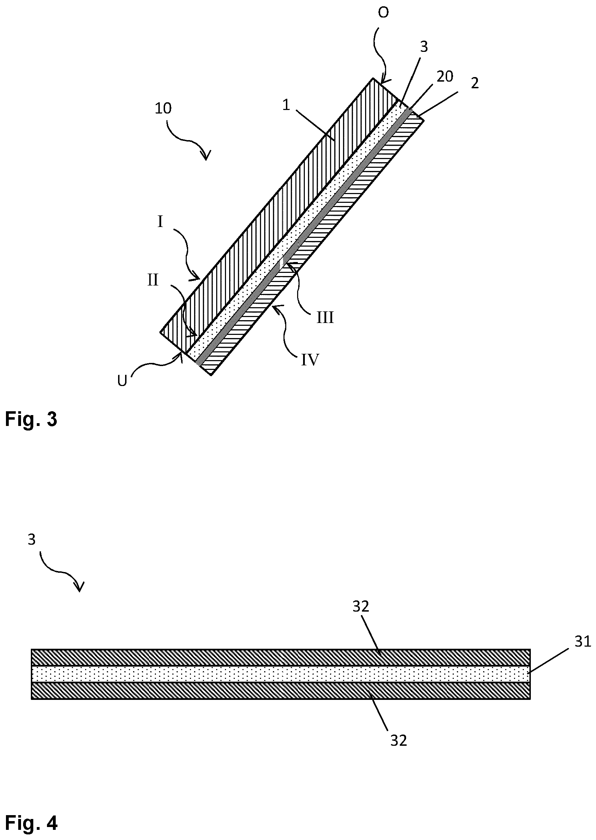

Figur 3 zeigt eine Ausgestaltung einer erfindungsgemäß ausgebildeten Windschutzscheibe 10. Die Außenscheibe 1 weist eine außenseitige Oberfläche I auf, die in Einbaulage der äußeren Umgebung zugewandt ist, und eine innenraumseitige Oberfläche II**,** die in Einbaulage dem Innenraum zugewandt ist. Ebenso weist die Innenscheibe 2 eine außenseitige Oberfläche III auf, die in Einbaulage der äußeren Umgebung zugewandt ist, und eine innenraumseitige Oberfläche IV, die in Einbaulage dem Innenraum zugewandt ist. Die Außenscheibe 1 und die Innenscheibe 2 bestehen beispielsweise aus Kalk-Natron-Glas. Die Außenscheibe 1 weist beispielsweise eine Dicke von 2,1 mm auf, die Innenscheibe 2 eine Dicke von 1,6 mm oder 2,1 mm.

Die außenseitige Oberfläche III der Innenscheibe 2 ist mit einer erfindungsgemäßen Reflexionsbeschichtung 20 versehen, die als Reflexionsfläche für die Projektorstrahlung (und eventuell zusätzlich als IR-reflektierende Beschichtung) vorgesehen ist. Die Reflexionsbeschichtung 20 ist beispielsweise auf der Oberfläche III durch magnetfeldunterstützte Kathodenzerstäubung ("Magnetron-Sputtern") abgeschieden.

Der Strahlung des Projektors 4 ist erfindungsgemäß p-polarisiert, insbesondere im Wesentlichen rein p-polarisiert. Da der Projektor 4 die Windschutzscheibe 10 mit einem Einfallswinkel von etwa 65° bestrahlt, der nahe dem Brewster-Winkel liegt, wird die Strahlung des Projektors nur unwesentlich an den externen Oberflächen I**,** IV der Verbundscheibe 10 reflektiert. Die erfindungsgemäße Reflexionsbeschichtung 20 dagegen ist auf die Reflexion p-polarisierter Strahlung optimiert. Sie dient als Reflexionsfläche für die Strahlung des Projektors 4 zur Erzeugung der HUD-Projektion.

Die Zwischenschicht 3 ist aus einer mehrlagigen PVB-Folie ausgebildet, die mehrere Lagen von PVB mit unterschiedlicher Elastizität und/oder Plastizität aufweist. Solche Folien werden auch als akustische Folien bezeichnet und haben eine geräuschmindernde Wirkung. Die Zwischenschicht 3 weist eine im Wesentlichen konstante Dicke auf, abgesehen von einer etwaigen fachüblichen Oberflächenrauigkeit - sie ist nicht als sogenannte Keilfolie ausgebildet.

Figur 4 zeigt einen Querschnitt der als Zwischenschicht 3 in Figur 3 verwendeten Folie. Die Folie besteht aus drei PVB-Lagen: zwei äußeren Lagen 32 und einer mittleren Lage 31, die von den äußeren Lagen 32 sandwich-artig umgeben wird. Die äußeren Lagen 32 weisen einen ersten Weichmacher-Anteil auf und die mittlere Lage 31 einen zweiten Weichmacher-Anteil. Der erste Weichmacher-Anteil und der zweite Weichmacher-Anteil sind unterschiedlich. Durch den unterschiedlichen Weichmacher-Anteil unterscheidet sich die Elastizität und/oder Plastizität der beiden äußeren Lagen 32 auf von derjenigen der mittleren Lage 31, worauf die geräuschmindernde Wirkung der akustischen Folie beruht. Die Dicke der Folie beträgt beispielsweise 0,86 mm.

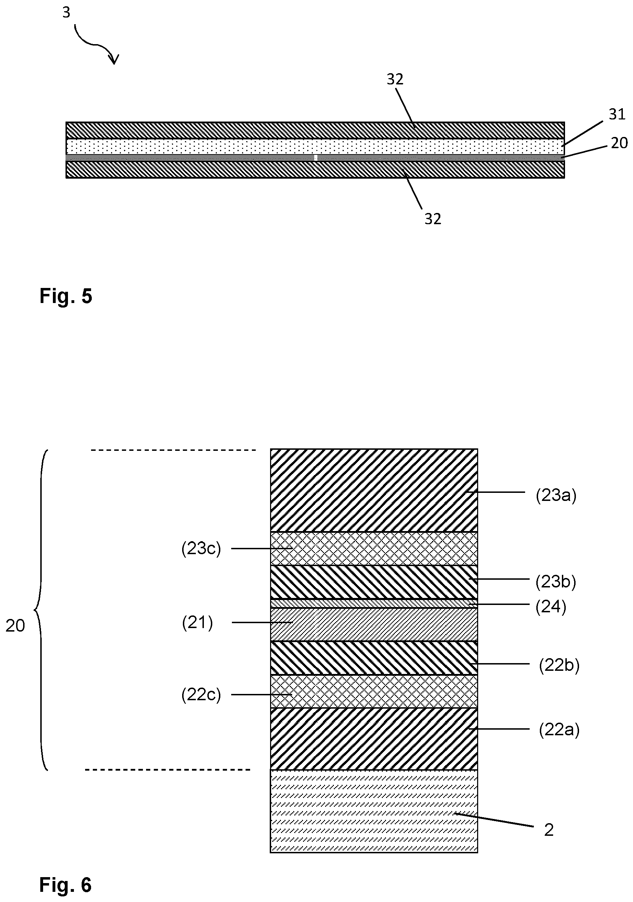

Figur 5 zeigt einen Querschnitt einer Weiterbildung der Folie aus Figur 4. Die Reflexionsbeschichtung 20 ist zwischen einer der äußeren Lagen 32 und der mittleren Lage 31 angeordnet. Die Reflexionsbeschichtung 20 ist somit in der Folie integriert und muss nicht eigens auf einer der Scheibenoberflächen abgeschieden werden wie in der Ausgestaltung der Figur 3. Stattdessen wird die Windschutzscheibe gleichzeitig mit der geräuschmindernden Zwischenschicht 3 und der Reflexionsbeschichtung 20 versehen, indem die Folie zwischen die Außenscheibe 1 und die Innenscheibe 2 zur Lamination eingelegt wird.

Figur 6 zeigt die Schichtenfolge einer bevorzugten Ausgestaltung der Reflexionsbeschichtung 20. Die Reflexionsbeschichtung 20 ist ein Stapel von Dünnschichten. Die Reflexionsbeschichtung 20 umfasst eine elektrisch leitfähige Schicht 21 auf Basis von Silber. Direkt oberhalb der elektrisch leitfähigen Schicht 21 ist eine metallische Blockerschicht 24 angeordnet. Darüber ist eine obere dielektrische Schichtenfolge angeordnet, die von unten nach oben aus einer oberen Anpassungsschicht 23b, einer oberen brechungsindexsteigernden Schicht 23c und einer oberen Entspiegelungsschicht 23a. Unterhalb der elektrisch leitfähigen Schicht 21 ist eine untere dielektrische Schichtenfolge angeordnet, die von oben nach unten aus einer unteren Anpassungsschicht 22b, einer unteren brechungsindexsteigernden Schicht 22c und einer unteren Entspiegelungsschicht 22a.

Der dargestellte Schichtaufbau ist lediglich beispielhaft zu versehen. So können die dielektrischen Schichtenfolgen auch mehr oder weniger Schichten umfassen, solange mindestens eine dielektrische Schicht oberhalb und unterhalb der leitfähigen Schicht 21 vorhanden ist. Die dielektrischen Schichtenfolgen müssen auch nicht symmetrisch sein. Beispielhafte Materialien und Schichtdicken können den nachfolgenden Beispielen entnommen werden.

Die Schichtenfolgen einer Windschutzscheibe 10 mit der Reflexionsbeschichtung 20 auf der außenseitigen Oberfläche III der Innenscheibe 2 gemäß der Beispiele 1 bis 5 sind, zusammen mit den Materialien und geometrische Schichtdicken der Einzelschichten, in Tabelle 1 dargestellt. Die dielektrischen Schichten können unabhängig voneinander dotiert sein, beispielsweise mit Bor oder Aluminium.

**Tabelle 1**

| Material | Bezugszeichen | | Schichtdicke | | | | |
|---|---|---|---|---|---|---|---|
| | | | Beispiel 1 | Beispiel 2 | Beispiel 3 | Beispiel 4 | Beispiel 5 |
| Kalk-Natron-Glas | 1 | | 2,1 mm | 2,1 mm | 2,1 mm | 2,1 mm | 2,1 mm |
| PVB | 3 | | 0,76 mm | 0,76 mm | 0,76 mm | 0,76 mm | 0,76 mm |
| SiN | 20 | 23a | 70 nm | 70 nm | 60 nm | 60 nm | 60 nm |
| SiZrN | | 23c | - | - | - | 10 nm | 10 nm |
| ZnO | | 23b | - | - | 10 nm | 10 nm | 10 nm |
| NiCr | | 24 | 0,3 nm | 0,3 nm | 0,3 nm | 0,3 nm | 0,3 nm |
| **Ag** | | **21** | **11 nm** | **12 nm** | **12 nm** | **11 nm** | **13 nm** |
| ZnO | | 22b | - | - | 10 nm | 10 nm | 10 nm |
| SiZrN | | 22c | - | - | - | 10 nm | 10 nm |
| SiN | | 22a | 30 nm | 35 nm | 25 nm | 20 nm | 20 nm |
| Kalk-Natron-Glas | 2 | | 2,1 mm | 2,1 mm | 2,1 mm | 2,1 mm | 2,1 mm |

Die Schichtenfolgen weiterer, nicht erfindungsgemäßer Beispiele 6 bis 9 sind in Tabelle 2 dargestellt.

**Tabelle 2**

| Material | Bezugszeichen | | Schichtdicke | | | |
|---|---|---|---|---|---|---|
| | | | Beispiel 6 | Beispiel 7 | Beispiel 8 | Beispiel 9 |
| Kalk-Natron-Glas | 1 | | 2,1 mm | 2,1 mm | 2,1 mm | 2,1 mm |
| PVB | 3 | | 0,76 mm | 0,76 mm | 0,76 mm | 0,76 mm |
| SiN | 20 | 23a | 50 nm | 35 nm | 30 nm | 40 nm |
| SiZrN | | 23c | - | - | 10 nm | 10 nm |
| ZnO | | 23b | - | 10 nm | 10 nm | 10 nm |
| NiCr | | 24 | 0,3 nm | 0,3 nm | 0,3 nm | 0,3 nm |
| **Ag** | | **21** | **12 nm** | **13 nm** | **13 nm** | **13 nm** |
| ZnO | | 22b | - | 10 nm | 10 nm | 10 nm |
| SiZrN | | 22c | - | - | 10 nm | 10 nm |
| SiN | | 22a | 50 nm | 35 nm | 50 nm | 40 nm |
| Kalk-Natron-Glas | 2 | | 2,1 mm | 2,1 mm | 2,1 mm | 2,1 mm |

Die Beispiele 1 bis 5 und die nicht erfindungsgemäßen Beispiele 6 bis 9 unterscheiden sich in erster Linie durch das Verhältnis der optischen Dicke der oberen dielektrischen Schichtenfolge zur optischen Dicke der unteren dielektrischen Schichtenfolge. Die optische Dicke ergibt sich jeweils als Produkt aus der in den Tabellen 1 und 2 dargestellten geometrischen Dicke und dem Brechungsindex (SiN: 2,0; SiZrN: 2,2, ZnO: 2,0). Die optischen Dicken und ihr Verhältnis sind in Tabelle 3 zusammengefasst. Das Verhältnis ϕ beschreibt das Verhältnis der optischen Dicke der oberen dielektrischen Schicht 23a bzw. Schichtenfolge 23a, 23b, ggf. 23c zur optischen Dicke der unteren dielektrischen Schicht 22a oder Schichtenfolge 22a, 22b, ggf. 22c.

**Tabelle 3**

| | optische Dicke der oberen dielektrischen Schichtenfolge | optische Dicke der unteren dielektrischen Schichtenfolge | Verhältnis ϕ |
|---|---|---|---|
| Beispiel 1 | 140 | 60 | 2,33 |
| Beispiel 2 | 140 | 70 | 2,00 |
| Beispiel 3 | 140 | 70 | 2,00 |
| Beispiel 4 | 162 | 82 | 1,98 |
| Beispiel 5 | 162 | 82 | 1,98 |
| Beispiel 6 | 100 | 100 | 1,00 |
| Beispiel 7 | 90 | 90 | 1,00 |
| Beispiel 8 | 102 | 142 | 0,72 |
| Beispiel 9 | 122 | 122 | 1,00 |

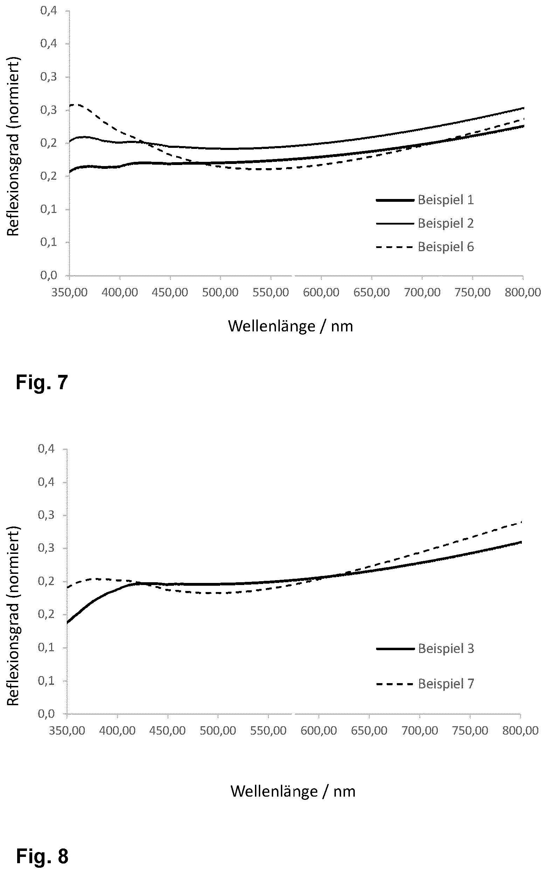

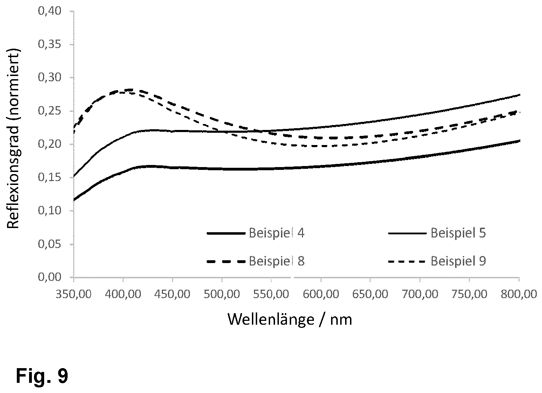

Figur 7, Figur 8 und Figur 9 zeigen Reflexionsspektren von Verbundscheibe 10 wie in Figur 3, jeweils mit einem Schichtaufbau gemäß der Beispiele 1 bis 5 nach Tabelle 1 sowie gemäß der nicht erfindungsgemäßen Beispiele 6 bis 9 nach Tabelle 2. Die Reflexionsspektren wurden mit einer Lichtquelle, die im betrachteten Spektralbereich p-polarisierte Strahlung gleichmäßiger Intensität ausstrahlt, aufgenommen, bei Bestrahlung über die Innenscheibe 2 (die sogenannte innenraumseitige Reflexion) unter einem Einstrahlwinkel von 65° zur innenraumseitigen Flächennormalen. Die Reflexionsmessung ist also der Situation in der Projektionsanordnung angenähert. Der besseren Übersichtlichkeit halber sind jeweils die Beispiele zusammengefasst, die einen ähnlichen Schichtaufbau aufwiesen. In Figur 7 sind die Beispiele 1 und 2 und das nicht erfindungsgemäße Beispiel 6 dargestellt, die jeweils nur über dielektrische Entspiegelungsschichten 22a, 23a verfügen. In Figur 8 sind das Beispiel 3 und das nicht erfindungsgemäße Beispiel 7 dargestellt, die jeweils über dielektrische Entspiegelungsschichten 22a, 23a und Anpassungsschichten 22b, 23b verfügen. In Figur 9 sind die Beispiele 4 und 5 und die nicht erfindungsgemäßen Beispiele 8 und 9 dargestellt, die jeweils über dielektrische Entspiegelungsschichten 22a, 23a, Anpassungsschichten 22b, 23b und brechungsindexsteigernde Schichten 22c, 23c verfügen.

Bereits aus der graphischen Darstellung der Spektren ist ersichtlich, dass die Beispiele 1 bis 5 zu einem glatteren Spektrum im interessierenden Spektralbereich von 400 nm bis 680 nm führen als die nicht erfindungsgemäßen Beispiele 6 bis 9. Dadurch wird eine farbneutralere Darstellung der HUD-Projektion sichergestellt. Außerdem wird der generelle Farbeindruck der Scheibe verbessert. Das unterschiedliche Verhalten ist insbesondere auf das Verhältnis der optischen Dicken von oberer und unterer dielektrischer Schicht beziehungsweise Schichtenfolge zurückzuführen. Der gemittelte Reflexionsgrad gegenüber p-polarisierter Strahlung sowie die Differenzen der Maximal- und Minimalwerte zum gemittelten Reflexionsgrad der Beispiele 1 bis 5 sind in Tabelle 4 zusammengefasst, die entsprechenden Werte für die nicht erfindungsgemäßen Beispiele 6 bis 9 in Tabelle 5. Außerdem ist jeweils die Standardabweichung des Reflexionsspektrums angegeben. Die Analysen beziehen sich jeweils auf den Spektralbereich von 400 nm bis 680 nm.

**Tabelle 4**

| | Beispiel 1 | Beispiel 2 | Beispiel 3 | Beispiel 4 | Beispiel 5 |
|---|---|---|---|---|---|
| gemittelten Reflexionsgrad gegenüber p-polarisierter Strahlung, 400 nm-680 nm | 17,6% | 19,9% | 20,2% | 16,6% | 22,3% |
| Differenz zwischen dem maximal auftretenden Reflexionsgrad und dem Mittelwert | 1,8% | 1,7% | 2,0% | 1,1% | 1,6% |
| Differenz zwischen dem minimal auftretenden Reflexionsgrad und dem Mittelwert | 1,1% | 0,7% | 1,5% | 0,9% | 1,3% |
| Standardabweichung, 400 nm-680 nm | 0,55% | 0,48% | 0,60% | 0,27% | 0,62% |

**Tabelle 5**

| | Beispiel 6 | Beispiel 7 | Beispiel 8 | Beispiel 9 |
|---|---|---|---|---|
| gemittelten Reflexionsgrad gegenüber p-polarisierter Strahlung, 400 nm-680 nm | 17,6% | 19,8% | 23,1% | 22,0% |
| Differenz zwischen dem maximal auftretenden Reflexionsgrad und dem Mittelwert | 4,2% | 3,6% | 5,1% | 5,8% |
| Differenz zwischen dem minimal auftretenden Reflexionsgrad und dem Mittelwert | 1,4% | 1,6% | 2,2% | 2,3% |
| Standardabweichung, 400 nm-680 nm | 1,49% | 1,11% | 2,52% | 2,70% |

Bei den nicht erfindungsgemäßen Beispielen 6 bis 9 sind relativ hohe gemittelte Reflexionswerte erreichbar, jedoch sind die Spektren im relevanten Spektralbereich von 400 nm bis 680 nm gewissen Schwankungen unterworfen, was zu Farbverschiebungen des HUD-Bildes führen kann sowie zu einem schlechteren Farbeindruck der Scheibe für den Betrachter. Im Gegensatz dazu bewirkt das Verhältnis der optischen Dicken von unterer und oberer dielektrischer Schicht/Schichtenfolge der Beispiele 1 bis 5 eine deutliche Glättung des Reflexionsspektrums, was zu einer farbneutraleren Widergabe des Projektorbildes und einem farbneutraleren Gesamteindruck führt.

Alle Scheiben wiesen eine Lichttransmission von größer als 70% auf, so dass sie als Windschutzscheibe eingesetzt werden können.

Es wurden auch Versuche durchgeführt mit einer Windschutzscheibe mit grün gefärbtem Außenglas. Die Reflexionsbeschichtung entsprach im Wesentlichen dem Beispiel 1, wobei lediglich die obere Entspiegelungsschicht 23a etwas dünner ausgebildet war (60 nm statt 70 nm). Die außenseitige Reflexion konnte deutlich reduziert werden (um 3-4% bei Beobachtungswinkeln von 8° und 60°, integrale Reflexion).

### Bezugszeichenliste:

- (10): Windschutzscheibe

- (1): Außenscheibe
- (2): Innenscheibe
- (3): thermoplastische Zwischenschicht
- (4): Projektor
- (5): Betrachter / Fahrzeugfahrer

- (20): Reflexionsbeschichtung
- (21): elektrisch leitfähige Schicht
- (22a): erste untere dielektrische Schicht / Entspiegelungsschicht
- (22b): zweite untere dielektrische Schicht / Anpassungsschicht
- (22c): dritte untere dielektrische Schicht / brechungsindexsteigernde Schicht
- (23a): erste obere dielektrische Schicht / Entspiegelungsschicht
- (23b): zweite obere dielektrische Schicht / Anpassungsschicht
- (23c): dritte obere dielektrische Schicht / brechungsindexsteigernde Schicht
- (24): metallische Blockerschicht

- (31): mittlere Lage thermoplastischen Materials der Zwischenschicht 3
- (32): äußere Lage thermoplastischen Materials der Zwischenschicht 3

- (O): Oberkante der Windschutzscheibe 10
- (U): Unterkante der Windschutzscheibe 10
- (B): HUD-Bereich der Windschutzscheibe 10
- (E): Eyebox

- (I): außenseitige, von der Zwischenschicht 3 abgewandte Oberfläche der Außenscheibe 1
- (II): innenraumseitige, zur Zwischenschicht 3 hingewandte Oberfläche der Außenscheibe 1
- (III): außenseitige, zur Zwischenschicht 3 hingewandte Oberfläche der Innenscheibe 2
- (IV): innenraumseitige, von der Zwischenschicht 3 abgewandte Oberfläche der Innenscheibe 2

## Patentansprüche

1. Projektionsanordnung für ein Head-Up-Display (HUD), mindestens umfassend
- eine Windschutzscheibe (10), umfassend eine Außenscheibe (1) und eine Innenscheibe (2), die über eine thermoplastische Zwischenschicht (3) miteinander verbunden sind, mit einem HUD-Bereich (B); und
- einen Projektor (4), der auf den HUD-Bereich (B) gerichtet ist;
wobei
- die Strahlung des Projektors (4) überwiegend p-polarisiert ist und
- die Windschutzscheibe (10) mit einer Reflexionsbeschichtung (20) versehen ist, die geeignet ist, p-polarisierte Strahlung zu reflektieren;
und wobei die Zwischenschicht (3) aus mindestens zwei Lagen (31, 32) thermoplastischen Materials mit unterschiedlicher Elastizität und/oder Plastizität ausgebildet ist,
und wobei die Reflexionsbeschichtung (20) genau eine elektrisch leitfähige Schicht (21) auf Basis von Silber aufweist,
und wobei
- unterhalb der elektrisch leitfähigen Schicht (21) eine untere dielektrische Schicht (22a) oder Schichtenfolge (22a, 22b, 22c) angeordnet ist, deren Brechungsindex mindestens 1,9 beträgt,
- oberhalb der elektrisch leitfähigen Schicht (21) eine obere dielektrische Schicht (23a) oder Schichtenfolge (23a, 23b, 23c) angeordnet ist, deren Brechungsindex mindestens 1,9 beträgt, und
- das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) mindestens 1,7 beträgt,
wobei die Brechungsindizes und optischen Dicken sich auf eine Wellenlänge von 550 nm beziehen.

2. Projektionsanordnung nach Anspruch 1, wobei die unterschiedliche Elastizität und/oder Plastizität der mindestens zwei Lagen (31, 32) thermoplastischen Materials durch einen unterschiedlichen Anteil an Weichmachern bewirkt wird.

3. Projektionsanordnung nach Anspruch 1 oder 2, wobei die Zwischenschicht (3) eine mittlere Lage (31) thermoplastischen Materials und zwei äußere Lagen (32) thermoplastischen Materials umfasst, wobei die äußeren Lagen (32) beidseitig der mittleren Lage (31) angeordnet sind, und wobei die mittlere Lage (31) eine andere Elastizität und/oder Plastizität aufweist als die beiden äußeren Lagen (32), insbesondere einen anderen Weichmacheranteil.

4. Projektionsanordnung nach einem der Ansprüche 1 bis 3, wobei die Außenscheibe (1) eine größere Dicke aufweist als die Innenscheibe (2).

5. Projektionsanordnung nach einem der Ansprüche 1 bis 4, wobei die Reflexionsbeschichtung (20) auf einer außenseitigen, zur Zwischenschicht (3) hingewandten Oberfläche (III) der Innenscheibe (2) angeordnet ist.

6. Projektionsanordnung nach einem der Ansprüche 1 bis 4, wobei die Reflexionsbeschichtung (20) zwischen zwei Lagen (31, 32) thermoplastischen Materials mit unterschiedlicher Elastizität und/oder Plastizität angeordnet ist.

7. Projektionsanordnung nach einem der Ansprüche 1 bis 6, wobei die Windschutzscheibe (10) mit der Reflexionsbeschichtung (20) im Spektralbereich von 400 nm bis 680 nm einen gemittelten Reflexionsgrad gegenüber p-polarisierter Strahlung von mindestens 15% aufweist, bevorzugt von mindestens 20%, gemessen mit einem Einfallswinkel von 65° zur innenraumseitigen Flächennormalen und einer Lichtquelle, die im betrachteten Spektralbereich gleichmäßig abstrahlt mit einer normierten Strahlungsintensität von 100%.

8. Projektionsanordnung nach einem der Anspruch 1 bis 7, wobei die Außenscheibe (1) getönt oder gefärbt ist und eine Lichttransmission von mindestens 80% aufweist, bestimmt als Gesamttransmission gemäß dem durch ECE-R 43, Anhang 3, § 9.1 festgelegten Verfahren zur Prüfung der Lichtdurchlässigkeit von Kraftfahrzeugscheiben.

9. Projektionsanordnung nach einem der Ansprüche 1 bis 8, wobei die Strahlung des Projektors (4) im Wesentlichen rein p-polarisiert ist.

10. Projektionsanordnung nach einem der Ansprüche 1 bis 9, wobei die externen Oberflächen (I, IV) der Windschutzscheibe (10) im Wesentlichen parallel zueinander angeordnet sind.

11. Projektionsanordnung nach einem der Ansprüche 1 bis 10, wobei die Strahlung des Projektors (4) mit einem Einfallswinkel von 60° bis 70° auf die Windschutzscheibe (10) trifft.

12. Projektionsanordnung nach einem der Ansprüche 1 bis 11, wobei die elektrisch leitfähige Schicht (21) eine geometrische Dicke von 10 nm bis 14 nm aufweist.

13. Projektionsanordnung nach einem der Ansprüche 1 bis 12, wobei das Verhältnis der optischen Dicke der oberen dielektrischen Schicht (23a) oder Schichtenfolge (23a, 23b, 23c) zur optischen Dicke der unteren dielektrischen Schicht (22a) oder Schichtenfolge (22a, 22b, 22c) mindestens 1,8 beträgt, bevorzugt mindestens 1,9.

## Claims

1. Projection arrangement for a head-up display (HUD), at least comprising
- a windscreen (10) having an outer pane (1) and an inner pane (2) which are connected to one another via a thermoplastic intermediate layer (3), with an HUD region (B); and
- a projector (4) which is directed toward the HUD region (B);
wherein
- the radiation of the projector (4) is predominantly p-polarised and
- the windscreen (10) is provided with a reflective coating (20) that is suitable for reflecting p-polarized radiation;
and wherein the intermediate layer (3) is formed from at least two layers (31, 32) of thermoplastic material with different elasticity and/or plasticity,
and wherein the reflective coating (20) comprises exactly one electrically conductive layer (21) based on silver,
and wherein
- a lower dielectric layer (22a) or layer sequence (22a, 22b, 22c) is arranged below the electrically conductive layer (21), the refractive index of which layer or layer sequence is at least 1.9,
- an upper dielectric layer (23a) or layer sequence (23a, 23b, 23c) is arranged above the electrically conductive layer (21), the refractive index of which layer or layer sequence is at least 1.9, and
- the ratio of the optical thickness of the upper dielectric layer (23a) or layer sequence (23a, 23b, 23c) to the optical thickness of the lower dielectric layer (22a) or layer sequence (22a, 22b, 22c) is at least 1.7,
wherein the refractive indices and optical thicknesses correspond to a wavelength of 550 nm.

2. Projection arrangement according to claim 1, wherein the different elasticity and/or plasticity of the at least two layers (31, 32) of thermoplastic material is caused by a different proportion of plasticisers.

3. Projection arrangement according to claim 1 or 2, wherein the intermediate layer (3) comprises a middle layer (31) of thermoplastic material and two outer layers (32) of thermoplastic material, wherein the outer layers (32) are arranged on both sides of the middle layer (31), and wherein the middle layer (31) has a different elasticity and/or plasticity than the two outer layers (32), in particular a different proportion of plasticisers.

4. Projection arrangement according to any of claims 1 to 3, wherein the outer pane (1) has a greater thickness than the inner pane (2).

5. Projection arrangement according to any of claims 1 to 4, wherein the reflective coating (20) is arranged on an outer surface (III) of the inner pane (2) that faces the intermediate layer (3).

6. Projection arrangement according to any of claims 1 to 4, wherein the reflective coating (20) is arranged between two layers (31, 32) of thermoplastic material with different elasticity and/or plasticity.

7. Projection arrangement according to any of claims 1 to 6, wherein the windscreen (10) with the reflective coating (20) has an average reflectance to p-polarised radiation of at least 15%, preferably at least 20%, in the spectral range from 400 nm to 680 nm, measured with an angle of incidence of 65° to the interior surface normal and a light source that emits uniformly in the considered spectral range with a normalised radiation intensity of 100%.

8. Projection arrangement according to any of claims 1 to 7, wherein the outer pane (1) is tinted or coloured and has a light transmission of at least 80%, determined as total transmission in accordance with the method for testing the light transmittance of motor vehicle windows laid down by ECE Regulation 43, Annex 3, section 9.1.

9. Projection arrangement according to any of claims 1 to 8, wherein the radiation of the projector (4) is substantially purely p-polarised.

10. Projection arrangement according to any of claims 1 to 9, wherein the external surfaces (I, IV) of the windscreen (10) are arranged substantially in parallel with one another.

11. Projection arrangement according to any of claims 1 to 10, wherein the radiation from the projector (4) strikes the windscreen (10) at an angle of incidence of 60° to 70°.

12. Projection arrangement according to any of claims 1 to 11, wherein the electrically conductive layer (21) has a geometric thickness of 10 nm to 14 nm.

13. Projection arrangement according to any of claims 1 to 12, wherein the ratio of the optical thickness of the upper dielectric layer (23a) or layer sequence (23a, 23b, 23c) to the optical thickness of the lower dielectric layer (22a) or layer sequence (22a, 22b, 22c) is at least 1.8, preferably at least 1.9.

## Revendications

1. Agencement de projection pour un affichage tête haute (HUD), comprenant au moins
- un pare-brise (10), comprenant une vitre extérieure (1) et une vitre intérieure (2) qui sont reliées entre elles par l'intermédiaire d'une couche intermédiaire (3) thermoplastique, comportant une zone HUD (B) ; et
- un projecteur (4) dirigé vers la zone HUD (B) ;
dans lequel
- le rayonnement du projecteur (4) est principalement polarisé p, et
- le pare-brise (10) est pourvu d'un revêtement réfléchissant (20) qui est adapté pour réfléchir un rayonnement polarisé p ;
et dans lequel la couche intermédiaire (3) est formée d'au moins deux couches (31, 32) de matériau thermoplastique comportant des élasticités et/ou des plasticités différentes,
et dans lequel le revêtement réfléchissant (20) présente exactement une couche électriquement conductrice (21) à base d'argent,
et dans lequel
- en dessous de la couche électriquement conductrice (21) est disposée une couche diélectrique inférieure (22a) ou une succession de couches (22a, 22b, 22c) dont l'indice de réfraction est d'au moins 1,9,
- au-dessus de la couche électriquement conductrice (21) est disposée une couche diélectrique supérieure (23a) ou une succession de couches (23a, 23b, 23c) dont l'indice de réfraction est d'au moins 1,9, et
- le rapport entre l'épaisseur optique de la couche diélectrique supérieure (23a) ou de la succession de couches (23a, 23b, 23c) et l'épaisseur optique de la couche diélectrique inférieure (22a) ou de la succession de couches (22a, 22b, 22c) est d'au moins 1,7,
dans lequel les indices de réfraction et les épaisseurs optiques se rapportent à une longueur d'onde de 550 nm.

2. Agencement de projection selon la revendication 1, dans lequel la différence d'élasticité et/ou de plasticité des au moins deux couches (31, 32) de matériau thermoplastique est provoquée par une proportion différente de plastifiants.

3. Agencement de projection selon la revendication 1 ou 2, dans lequel la couche intermédiaire (3) comprend une couche centrale (31) de matériau thermoplastique et deux couches extérieures (32) de matériau thermoplastique, dans lequel les couches extérieures (32) sont disposées de part et d'autre de la couche centrale (31), et dans lequel la couche centrale (31) présente une élasticité et/ou une plasticité différentes de celles des deux couches extérieures (32), en particulier une teneur en plastifiant différente.

4. Agencement de projection selon l'une des revendications 1 à 3, dans lequel la vitre extérieure (1) présente une épaisseur supérieure à celle de la vitre intérieure (2).

5. Agencement de projection selon l'une des revendications 1 à 4, dans lequel le revêtement réfléchissant (20) est disposé sur une surface (III) de la vitre intérieure (2) située côté extérieur et tournée vers la couche intermédiaire (3).

6. Agencement de projection selon l'une des revendications 1 à 4, dans lequel le revêtement réfléchissant (20) est disposé entre deux couches (31, 32) de matériau thermoplastique comportant des élasticités et/ou des plasticités différentes.

7. Agencement de projection selon l'une des revendications 1 à 6, dans lequel le pare-brise (10) avec le revêtement réfléchissant (20) présente, dans le domaine spectral allant de 400 nm à 680 nm, un degré de réflexion moyen par rapport au rayonnement polarisé p d'au moins 15 %, de préférence d'au moins 20 %, mesuré avec un angle d'incidence de 65° par rapport à la normale à la surface côté habitacle et une source lumineuse qui rayonne uniformément dans le domaine spectral concerné avec une intensité de rayonnement normalisée de 100 %.

8. Agencement de projection selon l'une des revendications 1 à 7, dans lequel la vitre extérieure (1) est teintée ou colorée et présente une transmission lumineuse d'au moins 80 %, déterminée en tant que transmission totale selon le procédé pour la vérification de la transmission lumineuse des vitres de véhicules automobiles défini par la norme ECE-R 43, annexe 3, § 9.1.

9. Agencement de projection selon l'une des revendications 1 à 8, dans lequel le rayonnement du projecteur (4) est sensiblement purement polarisé p.

10. Agencement de projection selon l'une des revendications 1 à 9, dans lequel les surfaces externes (I, IV) du pare-brise (10) sont disposées de manière à être sensiblement parallèles entre elles.

11. Agencement de projection selon l'une des revendications 1 à 10, dans lequel le rayonnement du projecteur (4) atteint le pare-brise (10) avec un angle d'incidence allant de 60° à 70°.

12. Agencement de projection selon l'une des revendications 1 à 11, dans lequel la couche électriquement conductrice (21) présente une épaisseur géométrique allant de 10 nm à 14 nm.

13. Agencement de projection selon l'une des revendications 1 à 12, dans lequel le rapport entre l'épaisseur optique de la couche diélectrique supérieure (23a) ou de la succession de couches (23a, 23b, 23c) et l'épaisseur optique de la couche diélectrique inférieure (22a) ou de la succession de couches (22a, 22b, 22c) est d'au moins 1,8, de préférence d'au moins 1,9.
